# FASCICULE DE BREVET EUROPEEN

(11) **EP 0 400 258 B1**
(45) Date de publication et mention de la délivrance du brevet: **04.08.1993**
(21) Numéro de dépôt: 89830244.3
(22) Date de dépôt: 02.06.1989
(51) Int. Cl.: A47J 31/30

(54) **Cafetière avec chaudière et cafetière superposée, et avec siflet de signalisation**
Kaffeemaschine mit Heisswasserkessel und darauf gelagertem Sammelbehälter und Signalpfeife
Coffee maker with a heating element, a superposed coffee pot and a whistle

(43) Date de publication de la demande: 05.12.1990
(73) Titulaire: Fibbi, Giovanni, I-50122 Firenze (IT)
(72) Inventeur: Fibbi, Giovanni, I-50122 Firenze (IT)
(74) Mandataire: Manzoni, Alessandro

(56) Documents cités:
- WO-A-85/03852
- BE-A- 562 391
- DE-A- 3 404 320
- FR-A- 1 061 936
- FR-E- 76 200
- US-A- 4 098 176

## Description

L'invention concerne un système de signalisation lié à une machine pour former une infusion de café du type comprenant un récipient à chaudière, une cafetière superposable et utilisable avec la chaudière et munie d'un conduit partant du fond pour l'écoulement de l'infusion, et un compartiment avec parois filtrantes pouvant contenir la poudre de café et avec un conduit puisant dans la chaudière jusqu'à un niveau de contenu résiduels d'eau aprés la montée et l'ecoulement de l'infusion par effet de la pression de la vapeur se formant dans la chaudière durant l'ébullition, au conduit partant du fond de la cafetière etant lié fonctionnellement un passage ouvrant vers le fond de la cafetière, pour former un siphon en forme de U retourné.

Une machine de ce type et corréspondante au préambule de la revendication 1 est comme par exemple dans le document WO-A-8 503 852, dans lequel toutefois la cafetière ne présente aucun moyen de signalisation acoustique de la formation du café. D'autre part dans le document FR-A -1 244 309 est connu une chaudière avec un signaleur acoustique.

Le but de l'invention est de prévoir une machine pour la production de café express qui présente un moyen acoustique pour signaler que l'infusion de café vient de se former.

Pour ce but, l'invention concerne une machine selon le préambule de la revendication 1, et caractérisée en ce qu'au sommet du siphon est placé un écoulement vers l'extérieur avec un mécanisme à sifflet qui entre en fonction aprés avoir terminé l'infusion, sous l'effet de la sortie de la vapeur sous pression limitée - suffisante au fonctionnement du sifflet-par la charge d'eau formée par le niveau de l'infusion entre la cafetière et le dit passage.

Le passage ouvrant ver le bas peut être lié au conduit partant du fond de la cafetière. Le passage peut être formé d'un élément tubulaire investi sur le dit conduit partant du fond de la cafetière.

En alternative, le passage peut être lié au conduit partant du fond de la cafetière.

Selon une autre forme de réalisation, le passage peut être formé en correspondance avec le "bec verseur" de la cafetière, et le siphon est délimité par la cavité utile de la cafetière.

L'invention concerne également un accessoire pour machine à café selon la revendication 6.

L'invention sera mieux comprise suivant la description et le dessin ci-joint, lequel illustre un exemple pratique, non limitatif, de l'invention même.

Dans le dessin les :

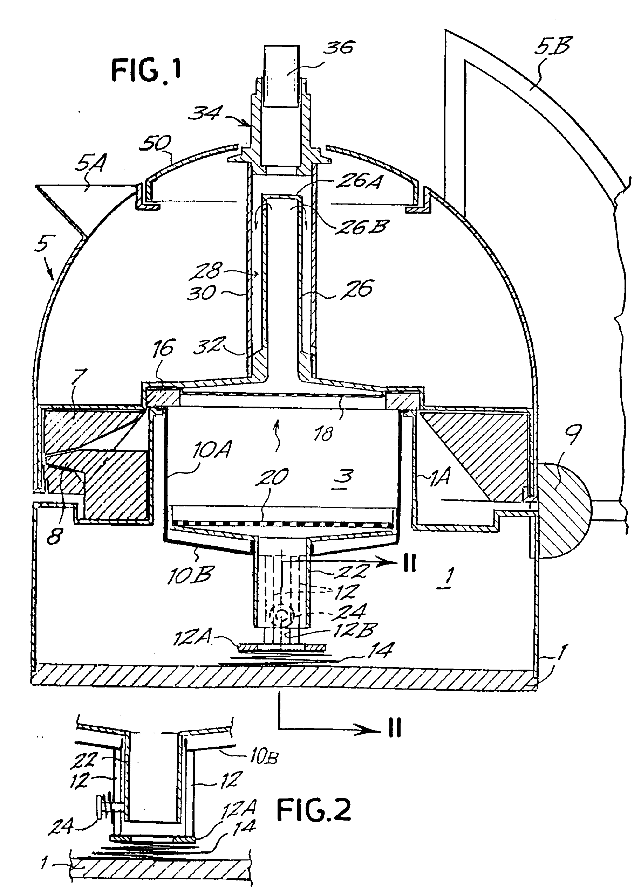

Fig. 1 et 2 illustrent une première forme de réalisation, en section verticale et en vue et section selon II - II de Fig. 1 et le

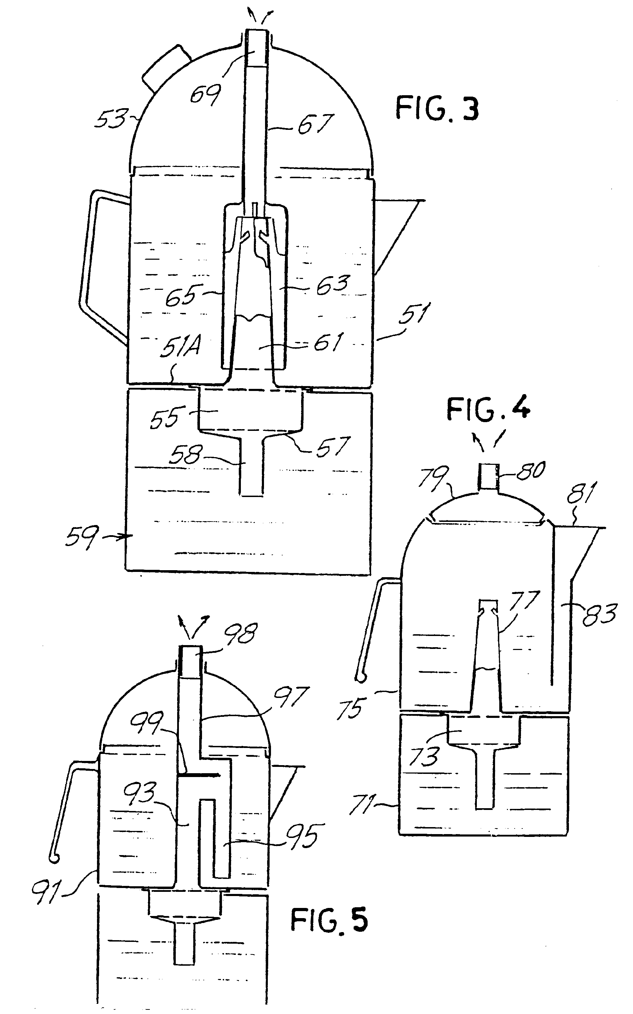

Fig. 3 à 5 illustrent des schémas de réalisation alternative.

Selon ce qui est illustré dans le dessin ci-joint, avec 1 est indiquée une chaudière dont la bouche 1A est susceptible d'être fermée par la présence d'un récipient à filtre 3 pour la poudre de café.

Avec 5 est indiquée la cafetière réelle, qui est susceptible d'être posée sur la chaudière 1 et liée à elle par un système d'introduction indiqué avec 7 8 et 9, les sièges étant formés par la cafetière et les petites ailes 8 étant solidaires à la chaudière. La partie 1A de la chaudière accueille en particulier un récipient avec une paroi latérale 10A cylindrique, pouvant définir latéralement le récipient 3 pour la poudre, la paroi 10A au moyen d'un raccord conique 10B se combine avec un groupe de colonnes verticales inférieures 12 avec une anneau 12A - sollicité lorsque la cafetière est montée, à un ressort 14 qui agit sur le fond de la chaudière 1, le ressort 14 favorise l'extraction de l'ensemble 10, 12 de la chaudière. La paroi 10A présente supérieurement une lévre avec joint 16 qui est pris, serré entre la paroi 1A de la chaudière et le fond 5B de la cafetière 5, avec l'interposition d'un disque troué 18, qui délimite dans la partie supérieure le compartiment 3 du récipient à filtre de la poudre de café.

A l'intérieur du compartiment 3 peut être placé un fond criblé 20, qui fait prise avec la paroi 10A et qui est solidaire à un conduit 22, ce conduit 22 glisse à longue-vue dans la colonne 12 solidaire au particulier 10A, 10B, juste au dessous du fond criblé 20, le conduit 22 présente des trous 23 pour le passage de l'eau.

L'ensemble 20, 22 peut-être déplacé verticalment par rapport à l'ensemble 10A, 10B, 12, à travers un système de bloc, d'une manière générale indiqué par 24, qui peut être constitué par un élastique pouvant être manoeuvré pour glisser le long d'une boutonnière 12B entre le colonne 12, pour rejoindre l'une ou l'autre des différents endroits de positionnement du conduit 22 par rapport à la colonne 12, et donc le retenir. Cette disposition permet de régler la quantité de poudre de café qui peut être contenue dans la cavité définie par le compartiment 3 et par la paroi criblée 20, contemporanément de cette façon est également réglée la quantité d'eau qui peut être soulevée par la pression de la chaudière à travers la masse de poudre de café, avec l'ébullition provoquée dans la chaudière. En effet réglant l'équipage 20, 22 par rapport à l'ensemble 10A, 10B 12, on détermine une variation de la capacité de contenir la poudre de café dans le compartiment 3. Contemporanément lorsque la cafetière est montée on modifie la distance de l'extrêmité inférieure du conduit 22 du fond de la chaudière, donc lorsque la cafetière est montée et ayant rempli la chaudière systématiquement jusqu'à un niveau donné et opportunément indiqué, la quantité d'eau qui avec la pression de la chaudière est poussée au travers du conduit 22 pour rejoindre la paroi 20 et traverser la masse de poudre de café, dépend de la position du bord inférieur du conduit 22. Avec un remplissage constant de la chaudière la distance plus importante de l'extrêmité inférieure du conduit 22 du fond de la chaudière, empéche la remontée de l'eau qui se trouve au dessous du niveau rejoint par cette extrêmité, donc en réduisant la quantité de poudre avec le soulévement de la paroi 20 on réduit également la quantité d'eau qui avec l'ébullition passe au travers de la poudre. Avec au moins deux ou trois position des pièces 20, 22 par rapport à l'ensemble 10A, 10B, 12, on peut doser la quantité de poudre et la quantité d'eau qui remontra au travers de la poudre afin d'avoir un bon rapport entre la quantité de poudre et la quantité d'eau et donc de l'infusion qui se forme. La cafetière peut donc être réglée pour un nombre de "tasses" de café selon les exigences, grâce au positionnement de la paroi 20.

Afin d'assurer le passage de l'eau de la chaudière vers la paroi 20, de petits orifices longitudinaux 12B seront prévus, dans la colonne tubolaire 12, ainsi que les trous 23 pour le passage de l'eau de l'intérieur du conduit 22 jusqu'au dessous de la paroi criblée 20 du filtre ;de cette façon l'eau qui remonte par effet de la pression dans la chaudière rejoint l'espace entre la paroi 10B et la paroi criblée 20 afin de pénétrer de façon uniforme au travers de la poudre de café contenue entre la paroi 10A, la paroi 20 et la 18.

L'infusion de café, qui se forme avec la montée de l'eau au travers du conduit 22, la paroi 20, la masse de poudre de café et la paroi criblée 18, remonte dans un conduit 26 monté sur le fond de la cafetière et se développant dans la cavité de la cafetière 5 ; ce conduit 26 est fermé dans la partie supérieure 26A et présente des ouvertures latérales 26B, au travers desquelles l'infusion s'écoule par la pression effectuée au travers de la chaudière pour rejoindre la cavité de la cafetière 5.

Au lieu de finir directement dans la cafetière 5, comme illustré dans le dessin, les trous 26B finissent dans un interstice 28 en forme de siphon qui est limité à l'extérieur du conduit 26 entre celui-ci et une paroi cylindrique 30, qui est elle aussi solidaire au fond de la cafetière et qui présente inférieurement des ouvertures 32 de comunication avec la cafetière. Ainsi se forme un système à siphon entre le conduit 26 et la cafetière même au travers de l'interstice 28 et les passages 32.A l'extrémité supérieure de la paroi cylindrique 30 est rattaché un corps 34, lequel contient un sifflet 36 ; ce sifflet reste muet jusqu'à ce que du conduit 26 remonte un liquide c'est-à-dire l'infusion qui s'écoule au travers du siphon représenté par l'interstice 28, lorsque le niveau de l'eau dans la chaudière 1 diminue au dessous du bord inférieur du conduit 22 ; la poussée de l'eau au travers de la poudre du filtre cesse et traverse le conduit 26 et commence la sortie de vapeur quui se trouve au dessus du niveau libre de l'eau dans la chaudière même ; la vapeur sort par le sifflet 36 car une surpression se forme (qui permet la sortie de la vapeur au travers du sifflet 36) par effet de la charge d'eau qui se forme entre la cafetière et l'interstice 28, où le niveau liquide peut s'abaisser jusqu'aux trous 32 créant en effet la surpression qui permet la sortie de la vapeur et donc le fonctionnement du sifflet. On obtient ainsi une signalation acoustique de l'achèvement de la formation de l'infusion. La signalation acoustique peut se prolonger pendant un certain temps, ceci est dû à la présence d'un résidu d'eau dans la chaudière et donc d'une continuation de la formation de vapeur jusqu'à l'intervention d'une personne.La cafetière 5 présente un bec verseur 5A et une poignée 5B, sur la cafetière il est possible d'appliquer un couvercle 50 qui prend également le corps 34 du sifflet 36.

Le dessin 3 répresente de façon très schématique une réalisation modifiée, dans laquelle sommairement par 51 est indiquée la cafetière dotée du couvercle 53, troué au centre, avec 55 est indiqué le compartiment pour la poudre de café, délimité par les deux parois trouées et par un collecteur conique 57 avec conduit 58 puisant dans la chaudière 59. Dans ce cas du fond 51A de la cafetière 51 part un conduit 61 qui permet l'écoulement latéral ans un interstice 63 formé d'un élément tubolaire 65. Cet élément 65 est pris et s'appuie sur l'extrêmité du conduit 61 et présente sur la partie supérieure un prolongement 67 avec un emplacement pour le sifflet 69, qui sort du couvercle 53. De cette façon également lorsque le niveau liquide dans chaudière 59 baisse au dessous de l'extrêmité inférieure du conduit 58 puisant dans la chaudière même, la vapeur en pression sortant du conduit 58 et du conduit 61 rejoint le sifflet 69 et sort au travers de celui-ci dans l'atmosphère, en provoquant la signalation acoustique,la vapeur peut maintenir une pression suffisante due à la charge d'eau qui peut être créée entre le niveau dans la cafetière 51 à l'extérieur du manteau ou conduit 65et la partie en forme de siphon formée par l'interstice 63, où le niveau de liquide peut descendre au dessous de celui dans la cafetière déterminant la pression résidue de la vapeur qui sort ainsi par le sifflet 69.

Dans le dessin 4 on désigne avec 71 la cafetière, avec 73 le compartiment pour la poudre de café et avec 75 la cafetière dans laquelle se poursuit le conduit 77 pour l'écoulement du café qui se forme dans le compartiment 73 avec le liquide qui est poussé par la pression de la chaudière au travers de la poudre de café et le conduit 77 même. La cafetière peut être fermée avec un couvercle 79 qui peut être fixé à tenue et sur lequel est placé un sifflet 80. En correspondance avec le bec verseur de la cafetière, est formé un passage 83 du bec 81 au fond de la cafetière, de ce fait se forme un siphon entre l'espace de la cafetière autour du conduit 77 et le passage 83, se forme ainsi dans ce cas également une charge d'eau suffisante pour maintenir une pression résidue de vapeur pour actionner le sifflet 80, après que l'infusion se soit formée et que de la chaudière sorte la vapeur.

Dans le dessin 5 est représenté de façon très schématique une solution dans laquelle la chaudière 91 le conduit 93 pour la remontée de l'infusion se prolonge avec une déviation 95 en forme de U retourné vers le bas pour créer le siphon en question, alors que d'une dérivation 97 vers le haut est placé le sifflet 98 ; une eventuelle paroi 99 favorise la déviation de l'infusion dans le passage 95 et permet la sortie de la vapeur par la dérivation 97 et par le sifflet 98.

Il est bien entendu que le dessin ne présente qu'un exemple donné uniquement comme démonstration pratique de l'invention.

## Revendications

1. Une machine pour former une infusion de café avec un récipient à chaudière (1, 59, 71, 91), une cafetière (5, 51, 75) superposable et utilisable avec la chaudière et munie d'un conduit (26, 61, 77, 93) partant du fond pour l'écoulement de l'infusion, et un compartiment (3, 55, 73) avec parois filtrantes pouvant contenir la poudre de café et avec un conduit (22, 58) puisant dans la chaudière jusqu'à un niveau de contenu résiduels d'eau après la montée et l'écoulement de l'infusion par effet de la pression de la vapeur se formant dans la chaudière durant l'ébullition, au conduit (26, 61, 77, 93) partant du fond de la cafetière étant lié fonctionnellement un passage (28, 63, 83, 95) ouvrant vers le fond de la cafetière, pour former un siphon en forme de U retourné,caractérisée par le fait qu'au sommet du siphon (28, 63, 83, 95) est placé un écoulement (34, 67, 97) vers l'extérieur avec un mécanisme à sifflet (36, 69, 80, 98) qui entre en fonction aprés avoir terminé l'infusion, sous l'effet de la sortie de la vapeur sous pression limitée - suffisante au fonctionnement du sifflet-par la charge d'eau formée par le niveau de l'infusion entre la cafetière et le dit passage.

2. Machine selon la revendication 1, caractérisée par le fait que le passage (28) ouvrant vers le bas est lié au conduit partant du fond de la cafetière.

3. Machine selon la revendication 1 et 2, caractérisée par le fait que le passage (63) est formé d'un élément tubolaire (65) placé sur le conduit en question, partant du fond de la cafetière.

4. Machine selon la revendication 1 et 2, caractérisée par le fait que le passage (95) est lié au conduit (63) partant du fond de la cafetière.

5. Machine selon la revendication 1, caractérisée par le fait que le passage (83) est formé en correspondence avec le bec verseur (81) de la cafetière, et que le siphon est délimité par la cavité utile de la cafetière.

6. Un accessosire pour machine à café du type indiqué dans le préambule de la revendication 1, conçu pour former, en combinaison avec une telle machine, un passage en forme de siphon et un emplacement avec sifflet de façon à produire une machine complète selon la revendication 1.

## Claims

1. A coffee machine to prepare a coffee infusion including a boiler vessell (1, 59, 71, 91), a coffee pot (5, 51, 75) to be put and used with the boiler and provided with a conduit (26, 61, 77, 93) starting from the bottom for the discharge of the infusion, and a section (3, 55, 73) with filtering walls suitable to contain the ground coffee and with a flow conduct (22, 58) which draws water from the boiler at the level left after the infusion boiled and got out, which is due to the steam pressure created in the boiler during the boiling, a passage (28, 63, 83, 95) being functionally connected to said conduit (26, 61, 77, 93) starting from the coffee pot bottom, said passage opening towards the coffee pot bottom to make a syphon in the shape of an upside-down U, characterized in that at the top of the syphon (28, 63, 83, 95) an outwards discharge (34, 67, 97) is placed and provided with a whistle device (36, 69, 80, 98) which is set in action when the infusion is over, thanks to the exit of the steam under a limited pressure -which is enough to set the whistle in action- by the water charge created by the infusion level between the coffee pot and said passage.

2. A machine as claimed in claim 1, characterized in that the downwards open passage (28) is connected to the conduit starting from the coffee pot bottom.

3. A machine as claimed in claims 1 and 2, characterized in that the passage (63) is defined by a tubular element (65) placed on the conduit in question starting from the coffee pot bottom.

4. A machine as claimed in claims 1 and 2, characterized in that the passage (95) is connected to the conduit (61) starting from the coffee pot bottom.

5. A machine as claimed in claim 1, characterized in that the passage (83) is placed in a position corresponding to the spout (81) of the coffee pot, and that the syphon is defined by the useful hollow of the coffee pot.

6. A coffee machine fitting of the type disclosed in the preamble of claim 1, designed to form, in consunction with said machine, a syphon-like passage and a whistle site so as to make a full machine as claimed in claim 1.

## Patentansprüche

1. Maschine für die Zubereitung von Filterkaffee mit einem kesselartigen Behälter (1, 59, 71, 91), mit einer auf den Kessel aufsetzbaren und mit dem Kessel benutzbaren Kaffeemaschine (5, 51, 75), die mit einem aus dem Boden vorstehenden Rohr (26, 61, 77, 93) für den Ablauf des Filterkaffees und mit einem das Kaffeepulver aufnehmenden Gefäß (3, 55, 73) mit filterartigen Wänden sowie mit einem Rohr (22, 58) versehen ist, das in den Kessel bis zu der Höhe eintaucht, die das Restwasser nach dem Hochsteigen und Ablaufen des Filterkaffees unter Wirkung des sich im Kessel beim Kochen bildenden Dampfes einnimmt, wobei mit dem aus dem Boden der Kaffeemaschine vorstehenden Rohr (26, 61, 77, 93) ein Durchlaß (28, 63, 83, 95) funktionell verbunden ist, der zum Boden der Maschine offen ist, um auf diese Weise einen Siphon in Gestalt eines umgekehrten U zu bilden, dadurch gekennzeichnet, daß am Scheitel des Siphons (28, 63, 83, 95) ein nach außen gerichteter Ablauf (34, 67, 97) vorgesehen ist, der mit einer Pfeifvorrichtung (36, 69, 97) versehen ist, die nach der Fertigstellung des Kaffees unter der Wirkung des unter begrenztem Druck, der für das Wirksamwerden der Pfeifvorrichtung ausreicht, austretenden Dampfes wirksam wird, welcher Druck sich infolge des Wasserdruckes entwickelt, der sich durch den Niveauunterschied des Kaffees zwischen der Kaffeemaschine und dem oben genannten Durchlaß nach unten des Siphons ergibt.

2. Maschine nach Anspruch 1, dadurch gekennzeichnet, daß der nach unten geöffnete Durchlaß (28) mit dem vom Boden der Kaffeemaschine vorstehenden Rohr verbunden ist.

3. Maschine nach den Ansprüchen 1 und 2, dadurch gekennzeichnet, daß der Durchlaß (63) von einem rohrförmigen Teil (65) gebildet ist, der an dem vom Boden der Kaffeemaschine vorstehenden Rohr angebracht ist.

4. Maschine nach den Ansprüchen 1 und 2, dadurch gekennzeichnet, daß der Durchlaß (95) mit dem vom Boden der Kaffeemaschine vorstehenden Rohr (63) verbunden ist.

5. Maschine nach Anspruch 1, dadurch gekennzeichnet, daß der Durchlaß (83) sich der Tülle (81) der Kaffeemaschine gegenüberliegend befindet und daß der Siphon von dem nutzbaren Hohlraum der Kaffeemaschine begrenzt ist.

6. Ein Zubehör für eine Kaffeemaschine von der Art, wie sie im Oberbegriff des Anspruches 1 beschrieben ist, das geeignet ist, zusammen mit einer solchen Maschine einen Durchlaß in Form eines Siphons und eine Anordnung mit Pfeife zu bilden, so daß es möglich ist, eine komplette Maschine gemäß Anspruch 1 herzustellen.
